(19) Europäisches Patentamt
European Patent Office
Office européen des brevets

(11) **EP 2 294 688 B1**

(12) **FASCICULE DE BREVET EUROPEEN**

(45) Date de publication et mention
de la délivrance du brevet:
**08.08.2018 Bulletin 2018/32**

(51) Int Cl.:
*H02P 6/185* *(2016.01)*  *H02P 27/08* *(2006.01)*
*H02P 6/18* *(2016.01)*  *H02P 21/14* *(2016.01)*

(21) Numéro de dépôt: **09772340.7**

(86) Numéro de dépôt international:
**PCT/EP2009/057777**

(22) Date de dépôt: **23.06.2009**

(87) Numéro de publication internationale:
**WO 2010/000640 (07.01.2010 Gazette 2010/01)**

(54) **PROCÉDÉ DE DÉTERMINATION DES INDUCTANCES D'UNE MACHINE SYNCHRONE A AIMANTS PERMANENTS**

VERFAHREN ZUR BESTIMMUNG DER INDUKTANZEN EINER PERMANENTMAGNET-SYNCHRONMASCHINE

METHOD FOR DETERMINING THE INDUCTANCES OF A PERMANENT MAGNET SYNCHRONOUS MACHINE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **01.07.2008 FR 0854427**

(43) Date de publication de la demande:
**16.03.2011 Bulletin 2011/11**

(73) Titulaire: **Schneider Toshiba Inverter Europe SAS
27120 Pacy sur Eure (FR)**

(72) Inventeurs:
• **BASIC, Duro**
**c/o Schneider Electric Industries SAS
Service Proprité Industrielle
F-92506 Rueil Malmaison Cedex (FR)**
• **CAPITANEANU, Stéfan**
**F-27220 Mousseaux Neuville (FR)**
• **MALRAIT, François**
**F-27120 Jouy Sur Eure (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**WO-A-2004/023639**  **US-A1- 2002 060 548**
**US-A1- 2004 051 495**  **US-A1- 2006 284 582**
**US-A1- 2007 070 560**  **US-B1- 6 172 498**

• **NOBUYUKI MATSUI: "Sensorless PM Brushless DC Motor Drives" IEEE TRANSACTIONS ON INDUSTRIAL ELECTRONICS, IEEE SERVICE CENTER, PISCATAWAY, NJ, USA, vol. 43, no. 2, 1 avril 1996 (1996-04-01), XP011023173 ISSN: 0278-0046**
• **PARASILITI F ET AL: "Initial rotor position estimation method for PM motors" INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 2, 8 octobre 2000 (2000-10-08), pages 1190-1196, XP010521468 ISBN: 978-0-7803-6401-1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte à un procédé de détermination des inductances d'une machine synchrone à aimants permanents appelé également PMSM (pour "Permanent Magnet Synchronous Machine"). L'invention concerne également un variateur de vitesse apte à mettre en oeuvre ledit procédé.

De façon connue, un variateur de vitesse comporte un module redresseur qui fournit une tension continue à partir d'un réseau d'alimentation alternatif extérieur et un module onduleur (ou hacheur). Ce module onduleur comprend des composants électroniques semi-conducteurs de puissance pour hacher la tension continue en Modulation de Largeur d'Impulsion (MLI ou Pulse Width Modulation PWM), de façon à fournir en sortie via un câble de puissance une tension électrique variable pulsée et une fréquence de rotation variable à la machine. Un dispositif de commande du variateur contrôle la conduction et le blocage des composants semi-conducteurs à la fréquence d'échantillonnage, pour commander la machine en MLI avec une tension variable appropriée.

Les machines synchrones à aimants permanents sont de plus en plus utilisés dans la variation de vitesse à cause de leur simplicité de construction et leur haute efficacité. Ces machines peuvent être classées en deux grandes catégories : les machines dotées d'un rotor lisse ou cylindrique et les machines dotées d'un rotor saillant. Pour les deux types de machine, il est important de connaître les inductances de flux sur l'axe d et de couple sur l'axe q afin d'obtenir une boucle de commande et un modèle de référence fiables et cohérents.

Il est connu des brevets US 6,498,452 et US 7,067,997 des méthodes pour déterminer la position initiale du rotor d'une machine synchrone. Ces méthodes s'appuient notamment sur la mesure des inductances suivant les directions des phases.

Notons également les travaux du Pr. M. Shroedl (e.g. "Sensorless control of AC Machines at Low Speed and Standstill Based on the "INFORM" Method", 31st Conférence Record of IEEE Industry Applications Conférence, IAS 1996., vol. 1, pp. 270 to 277, 6-10 Oct 1996). Les documents suivants font partie de l'art antérieur de la présente demande: US6172498, US2007/070560, US2006/284582, NOBUYUKI MATSUI: "Sensorless PM Brushless DC Motor Drives", PARASILITI F ET AL: "Initial rotor position estimation method for PM motors", WO2004/023639, US2004/051495, US2002/060548. Le but de l'invention est de proposer un procédé permettant de déterminer les inductances de flux et de couple d'une machine synchrone à aimants permanents.

Ce but est atteint par un procédé de commande mis en oeuvre dans un variateur de vitesse pour déterminer les inductances de flux et de couple d'une machine synchrone à aimants permanents comportant trois phases orientées chacune suivant une direction, un stator et un rotor, caractérisé en ce que ledit procédé comprend des étapes de :

- application suivant la direction de chaque phase d'un vecteur tension (dans le sens positif et d'un vecteur tension dans le sens négatif pendant une durée déterminée,

- mesure d'une réponse en courant dans chaque phase après application des vecteurs tensions dans les deux sens, la réponse en courant comportant pour chaque phase un pic positif et un pic négatif,

- détermination d'un angle de position du rotor par rapport au stator à partir des asymétries entre les pic positifs et les pic négatifs des réponses en courant mesurées dans toutes les phases,

- détermination des inductances de flux et de couple de la machine en fonction de l'angle déterminé.

Le procédé de l'invention est applicable quel que soit le type de rotor employé (lisse ou saillant) et quel que soit le type de saillance (Ld>Lq ou Ld=Lq ou Ld<Lq).

Selon une particularité, pour chaque phase, le vecteur tension appliqué dans le sens positif et le vecteur tension appliqué dans le sens négatif ont une même norme.

Selon une autre particularité, pour une phase, l'application du vecteur tension dans le sens positif et du vecteur tension dans le sens négatif consiste à appliquer une séquence de tension comportant un créneau positif de tension d'une largeur d'impulsion déterminée, suivi d'un créneau négatif de tension ayant deux fois la largeur d'impulsion déterminée, suivi d'un créneau positif de tension de la largeur d'impulsion déterminée.

Selon une autre particularité, la réponse en courant dans la phase comporte un pic de courant positif et un pic de courant négatif et le procédé consiste à récupérer pour chaque phase et aux mêmes instants, deux valeurs de courant distinctes sur le pic de courant positif, dans sa phase de croissance et deux valeurs de courant distinctes sur le pic de courant négatif, dans sa phase de décroissance.

Plus précisément, le procédé consiste à déterminer les valeurs suivantes :

$$\Delta Ia_{ave} = \frac{\left|\delta I_{a+}\right| + \left|\delta I_{a-}\right|}{2}$$

$$\Delta Ia_{diff} = \frac{\left|\delta I_{a+}\right| - \left|\delta I_{a-}\right|}{2}$$

$$\Delta Ib_{ave} = \frac{\left|\delta I_{b+}\right| + \left|\delta I_{b-}\right|}{2}$$

$$\Delta Ib_{diff} = \frac{\left|\delta I_{b+}\right| - \left|\delta I_{b-}\right|}{2}$$

$$\Delta Ic_{ave} = \frac{\left|\delta I_{c+}\right| + \left|\delta I_{c-}\right|}{2}$$

$$\Delta Ic_{diff} = \frac{\left|\delta I_{c+}\right| - \left|\delta I_{c-}\right|}{2}$$

L'angle est ensuite déterminé à partir des relations suivantes :

$$\Delta I_{diff} = \Delta Ia_{diff} e^{j2\pi/3} + \Delta Ib_{diff} e^{j2\pi/3} + \Delta Ic_{diff} e^{j4\pi/3} \text{ et } \theta_r = \arctan(\Delta I_{diff})$$

Les inductances de flux et de couple de la machine sont déterminées à partir des relations suivantes :

$$\Delta I_{ave} = \frac{1}{3}(\Delta Ia_{ave} + \Delta Ib_{ave} + \Delta Ic_{ave})$$

$$\Delta I_{var} = \frac{2}{3}(\Delta Ia_{ave}\cos(2\theta r) + \Delta Ib_{ave}\cos(2\theta r + 2\pi/3) + \Delta Ic_{ave}\cos(2\theta r + 4\pi/3)$$

$$\Delta I_d = \Delta I_{ave} + \Delta I_{var}$$

$$\Delta I_q = \Delta I_{ave} - \Delta I_{var}$$

$$L_d = \frac{2/3 V_{dc}\Delta t}{\Delta I_d}$$

$$L_q = \frac{2/3 V_{dc} \Delta t}{\Delta I_q}$$

L'invention concerne également un variateur de vitesse comprenant un onduleur de type MLI pour fournir une tension pulsée à une machine synchrone triphasée à aimants permanents, ledit variateur mettant en oeuvre le procédé décrit ci-dessus.

D'autres caractéristiques et avantages vont apparaître dans la description détaillée qui suit en se référant à un mode de réalisation donné à titre d'exemple et représenté par les dessins annexés sur lesquels :

- La figure 1 représente de manière simplifiée un onduleur de type MLI alimentant une machine électrique synchrone triphasée à aimants permanents,

- les figures 2A et 2B représentent respectivement les combinaisons d'ouverture/fermeture des interrupteurs du module onduleur pour obtenir respectivement un vecteur tension V1 suivant la phase a et un vecteur tension V4 suivant cette même phase a,

- la figure 3 représente de façon vectorielle, les tensions appliquées suivant les directions de chaque phase de la machine,

- la figure 4 représente la séquence en tension appliquée pour la phase a et la réponse en courant obtenue dans la phase a,

- la figure 5 représente de façon vectorielle des réponses en courant obtenues pour chaque phase après application sur chaque phase des vecteurs tensions représentés en figure 3.

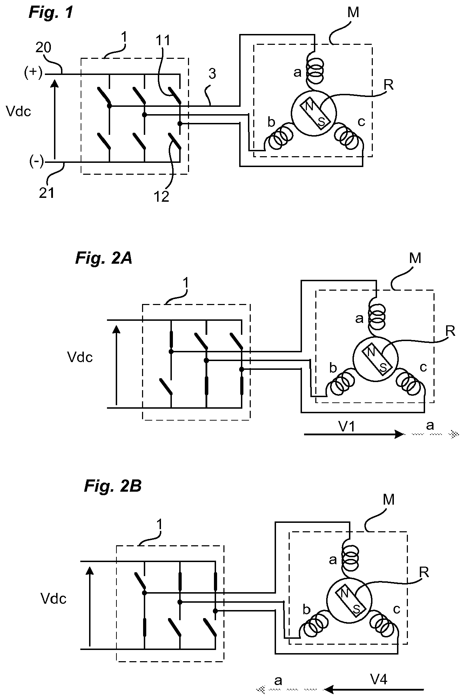

En référence au schéma de principe simplifié de la figure 1, un variateur de vitesse destiné à la commande d'une machine M synchrone triphasée à aimants permanents comprend un module redresseur (non représenté) composé en règle générale d'un pont de diodes, fournissant une tension continue sur un bus continu d'alimentation de puissance. Le bus continu comporte une ligne positive 20 et une ligne négative 21, un condensateur de bus (non représenté) étant connecté entre la ligne positive 20 et la ligne négative 21 du bus continu. Le bus continu alimente un module onduleur 1 relié à la machine M par un câble de puissance 3 alimentant les trois phases a, b, c de la machine orientées suivant trois directions décalées chacune entre elles de 120°. Pour chaque phase a, b, c de la machine M, le module onduleur 1 comprend deux interrupteurs électroniques semi-conducteurs de puissance 11,12, de type IGBT ou autres (représentés sur la figure 1 comme de simples interrupteurs pour simplifier le dessin), permettant de générer une tension variable à la machine à partir de la tension continue Vdc du bus. Le variateur comporte en outre également des moyens de commande, de traitement et de mémorisation pour mettre en oeuvre ses différentes fonctionnalités.

Le procédé de l'invention est applicable pour des machines synchrones à aimants permanents dotés d'un rotor lisse ou d'un rotor saillant.

Le principe de l'invention est d'appliquer pour chaque phase, l'une après l'autre, suivant chaque direction des phases, un vecteur tension dans le sens positif et un vecteur tension dans le sens négatif. Deux vecteurs tension sont donc appliqués pour chaque phase a, b, c. Par vecteur tension, on entend un vecteur dont la résultante est issue des différentes tensions appliquées sur les trois phases. Les figures 2A et 2B montrent une combinaison d'actionnement des interrupteurs de chaque phase permettant d'obtenir respectivement un vecteur tension positif V1 suivant la direction de la phase a et un vecteur tension négatif V4 suivant cette même direction. Pour chaque phase, le vecteur tension positif et le vecteur tension négatif appliqués sont préférentiellement de même norme afin de ne pas créer un mouvement du rotor. La norme de chaque vecteur tension Vi appliqué est dépendante de la tension Vdc du bus continu et vaut par exemple 2/3 de la tension Vdc.

$$Vi = 2/3 Vdc$$

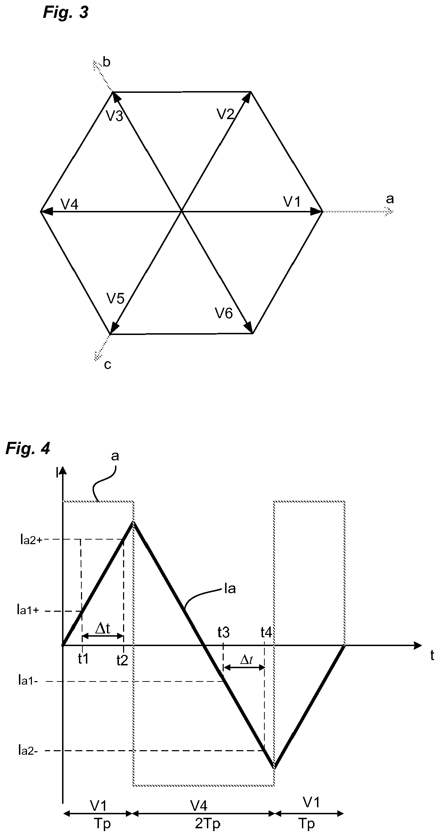

En référence à la figure 3, les vecteurs tension V1, V2, V3, V4, V5 et V6 sont donc appliqués suivant les directions des phases a, b, c dans les sens positif et négatif.

Pour une phase (la phase a), la séquence de tension permettant d'obtenir un vecteur tension positif et un vecteur tension négatif suivant la direction de la phase est montrée en figure 4. Cette séquence de tension consiste à appliquer grâce au module onduleur 1 une tension entre la phase étudiée et les deux autres phases et comporte un premier créneau positif de tension d'une largeur d'impulsion Tp déterminée, suivi d'un créneau négatif de tension ayant deux fois la largeur d'impulsion Tp déterminée, suivi d'un créneau positif de tension de la largeur d'impulsion Tp déterminée. Cette séquence de tension est optimisée de manière à ne pas créer de couple sur la machine et donc à ne pas entraîner de mouvement du rotor.

La largeur d'impulsion Tp employée peut être déterminée en balayant différentes largeurs d'impulsion jusqu'à obtenir un pic de courant ayant une valeur suffisamment élevée pour entraîner un effet de saturation détectable.

Selon l'invention, la réponse en courant obtenue sur la phase étudiée est analysée de manière à en extraire plusieurs valeurs. Comme représentée sur la figure 4, pour une séquence de tension telle que définie ci-dessus, la réponse en courant obtenue présente successivement un pic positif et un pic négatif.

L'analyse de la réponse en courant consiste à récupérer pour chaque phase quatre valeurs de courant à l'aide d'un circuit spécifique d'échantillonnage. En référence à la figure 4, deux valeurs de courant sont récupérées dans la phase de croissance du pic de courant positif et deux valeurs de courant sont récupérées dans la phase de décroissance du pic de courant négatif. Les valeurs sont récupérées au mêmes instants pour toutes les phases, l'intervalle de temps $\Delta t$ entre deux mesures dans le sens négatif ou dans le sens positif étant toujours identique. Pour la première impulsion de tension positive, la première valeur Ia1+ est par exemple récupérée à un tiers de la largeur d'impulsion (à t1 sur la figure 4) tandis que la seconde valeur Ia2+ est récupérée vers la fin de l'impulsion de tension (à t2 sur la figure 4).

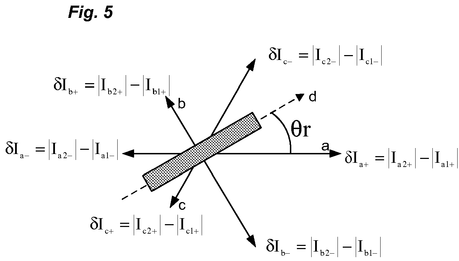

Comme représenté sur la figure 5, pour la phase a on récupère donc, pour le pic positif, à t1, la valeur Ia1+ et à t2, la valeur Ia2+ et pour le pic négatif, à t3, la valeur Ia1- et à t4, la valeur Ia2-. Les mêmes mesures sont effectuées aux mêmes instants pour chacune des réponses en courants des autres phases. Ainsi, on obtient pour la phase b, les valeurs Ib2+, Ib1+, Ib2-, Ib1- et pour la phase c, les valeurs Ic2+, Ic1+, Ic2-, Ic1-.

Ensuite, à partir de ces valeurs de courant, il s'agit de déterminer pour chaque phase les variations de courant dans les directions négatives et positives. On obtient alors

$$\delta I_{a+} = \left| I_{a2+} \right| - \left| I_{a1+} \right|$$

$$\delta I_{a-} = \left| I_{a2-} \right| - \left| I_{a1-} \right|$$

$$\delta I_{b+} = \left| I_{b2+} \right| - \left| I_{b1+} \right|$$

$$\delta I_{b-} = \left| I_{b2-} \right| - \left| I_{b1-} \right|$$

$$\delta I_{c+} = \left| I_{c2+} \right| - \left| I_{c1+} \right|$$

$$\delta I_{c-} = \left| I_{c2-} \right| - \left| I_{c1-} \right|$$

Les vecteurs correspondants sont représentés en figure 5.

Bien que les tensions appliquées sur chaque phase dans le sens positif et dans le sens négatif sont identiques, les valeurs de courants obtenus pour une même phase ne sont pas symétriques du fait de l'effet de saturation magnétique du moteur. En effet, les réponses en courant à des impulsions de tension appliquées sur chaque phase dépendent de la position du rotor. Afin de tenir compte de l'effet de saturation magnétique, on calcule donc pour chaque phase la moyenne des variations dans le sens positif et négatif et la différence entre les variations dans le sens positif et négatif, c'est-à-dire :

$$\Delta Ia_{ave} = \frac{\left| \delta I_{a+} \right| + \left| \delta I_{a-} \right|}{2}$$

$$\Delta Ia_{diff} = \frac{\left|\delta I_{a+}\right| - \left|\delta I_{a-}\right|}{2}$$

$$\Delta Ib_{ave} = \frac{\left|\delta I_{b+}\right| + \left|\delta I_{b-}\right|}{2}$$

$$\Delta Ib_{diff} = \frac{\left|\delta I_{b+}\right| - \left|\delta I_{b-}\right|}{2}$$

$$\Delta Ic_{ave} = \frac{\left|\delta I_{c+}\right| + \left|\delta I_{c-}\right|}{2}$$

$$\Delta Ic_{diff} = \frac{\left|\delta I_{c+}\right| - \left|\delta I_{c-}\right|}{2}$$

Le vecteur résultant des différences présentées ci-dessus est défini de la manière suivante :

$$\Delta I_{diff} = \Delta Ia_{diff} + \Delta Ib_{diff}\, e^{j2\pi/3} + \Delta Ic_{diff}\, e^{j4\pi/3}$$

Le vecteur différence $\Delta I_{diff}$ est orienté suivant une direction dans laquelle la saturation magnétique est la plus prononcée, c'est-à-dire suivant l'axe d sur lequel le rotor est positionné. Par conséquent la position du rotor définie par l'angle $\theta_r$ peut être déduite directement du vecteur $\Delta I_{diff}$, de sorte que :

$$\theta_r = \arctan(\Delta I_{diff})$$

Cependant, l'objectif de l'invention n'est pas de déterminer la position du rotor mais les inductances de flux Ld et de couple Lq. Pour cela, le procédé de l'invention utilise les moyennes $\Delta Ia_{ave}, \Delta Ib_{ave}, \Delta Ic_{ave}$ calculées pour chaque phase dans les deux sens. En partant des moyennes des courants obtenus pour chaque phase dans les deux sens, cela permet de moyenner l'effet de saturation qui est différent selon que le courant est orienté suivant une direction négative ou suivant une direction positive.

Par ailleurs, il est connu que les courants déterminés pour chaque phase comportent une composante constante et une composante variable dépendante du cosinus de deux fois l'angle $\theta_r$ défini ci-dessus. La composante constante vaut :

$$\Delta I_{ave} = \frac{1}{3}(\Delta Ia_{ave} + \Delta Ib_{ave} + \Delta Ic_{ave})$$

Selon le modèle standard haute fréquence d'une machine synchrone, l'amplitude de la composante variable $\Delta I_{var}$ peut être déterminée après démodulation des moyennes.

$$\Delta I_{var} = \frac{2}{3}(\Delta Ia_{ave}\cos(2\theta r) + \Delta Ib_{ave}\cos(2\theta r + 2\pi/3) + \Delta Ic_{ave}\cos(2\theta r + 4\pi/3))$$

A partir de la composante constante $\Delta I_{ave}$ et de la composante variable $\Delta I_{var}$, il est possible de déterminer les valeurs maximales et minimales de courant qui devraient être obtenues lorsque les vecteurs tensions sont appliqués suivant les axes d de flux et q de couple du rotor. On obtient alors :

$$\Delta I_d = \Delta I_{ave} + \Delta I_{var}$$

$$\Delta I_q = \Delta I_{ave} - \Delta I_{var}$$

Les inductance Ld, Lq se déduisent alors des relations suivantes :

$$L_d = \frac{2/3 V_{dc} \Delta t}{\Delta I_d}$$

$$L_q = \frac{2/3 V_{dc} \Delta t}{\Delta I_q}$$

Avec Vdc qui est la tension du bus continu et $\Delta t$ le temps mesuré entre deux mesures de courant sur le pic positif ou sur le pic négatif.

## Revendications

1. Procédé de commande mis en oeuvre dans un variateur de vitesse pour déterminer les inductances de flux et de couple (Ld, Lq) d'une machine synchrone à aimants permanents comportant trois phases (a, b, c) orientées chacune suivant une direction, un stator et un rotor, **caractérisé en ce que** ledit procédé comprend des étapes de :

   - application suivant la direction de chaque phase (a, b, c) d'un vecteur tension (V1, V3, V5) dans le sens positif et d'un vecteur tension (V2, V4, V6) dans le sens négatif pendant une durée déterminée, pour une phase, l'application du vecteur tension dans le sens positif et du vecteur tension dans le sens négatif consistant à appliquer une séquence de tension comportant un créneau positif de tension d'une largeur d'impulsion (Tp) déterminée, suivi d'un créneau négatif de tension ayant deux fois la largeur d'impulsion (Tp) déterminée, suivi d'un créneau positif de tension de la largeur d'impulsion (Tp) déterminée,
   - mesure d'une réponse en courant dans chaque phase après application des vecteurs tensions dans les deux sens, la réponse en courant comportant pour chaque phase un pic positif et un pic négatif,
   - récupération pour chaque phase et aux mêmes instants, de deux valeurs de courant distinctes (Ia1+, Ia2+, Ib1+, Ib2+, Ic1+, Ic2+) sur le pic de courant positif, dans sa phase de croissance et deux valeurs de courant distinctes (Ia1-, 1a2-, Ib1-, Ib2-, Ic1-, Ic2-) sur le pic de courant négatif, dans sa phase de décroissance,
   - détermination des valeurs suivantes :

$$\Delta Ia_{ave} = \frac{\left| \delta I_{a+} \right| + \left| \delta I_{a-} \right|}{2}$$

$$\Delta Ia_{diff} = \frac{\left| \delta I_{a+} \right| - \left| \delta I_{a-} \right|}{2}$$

$$\Delta Ib_{ave} = \frac{\left| \delta I_{b+} \right| + \left| \delta I_{b-} \right|}{2}$$

$$\Delta Ib_{diff} = \frac{\left|\delta I_{b+}\right| - \left|\delta I_{b-}\right|}{2}$$

$$\Delta Ic_{ave} = \frac{\left|\delta I_{c+}\right| + \left|\delta I_{c-}\right|}{2}$$

$$\Delta Ic_{diff} = \frac{\left|\delta I_{c+}\right| - \left|\delta I_{c-}\right|}{2}$$

dans lesquelles $\delta I_{a+}$, $\delta I_{a-}$, $\delta I_{b+}$, $\delta I_{b-}$, $\delta I_{c+}$, $\delta I_{c-}$ représentent pour chaque phase les variations de courant calculées à partir des valeurs de courant récupérées sur le pic de courant positif et sur le pic de courant négatif obtenus.

- détermination d'un angle ($\theta_r$) de position du rotor par rapport au stator à partir de la relation suivante :
- $\Delta I_{diff} = \Delta Ia_{diff} + \Delta Ib_{diff}e^{j2\pi/3} + \Delta Ic_{diff}e^{j4\pi/3}$ et $\theta_r = \arctan(\Delta I_{diff})$
- détermination des inductances de flux (Ld) et de couple (Lq) de la machine en fonction de l'angle ($\theta_r$) déterminé.

2. Procédé selon la revendication 1, **caractérisé en ce que**, pour chaque phase (a, b, c), le vecteur tension appliqué dans le sens positif et le vecteur tension appliqué dans le sens négatif ont une même norme.

3. Procédé selon la revendication 1 ou 2, **caractérisé en ce que** les inductances de flux et de couple de la machine sont déterminées à partir des relations suivantes :

$$\Delta I_{ave} = \frac{1}{3}(\Delta Ia_{ave} + \Delta Ib_{ave} + \Delta Ic_{ave})$$

$$\Delta I_{var} = \frac{2}{3}(\Delta Ia_{ave}\cos(2\theta r) + \Delta Ib_{ave}\cos(2\theta r + 2\pi/3) + \Delta Ic_{ave}\cos(2\theta r + 4\pi/3)$$

$$\Delta I_d = \Delta I_{ave} + \Delta I_{var}$$

$$\Delta I_q = \Delta I_{ave} - \Delta I_{var}$$

$$L_d = \frac{2/3V_{dc}\Delta t}{\Delta I_d}$$

$$L_q = \frac{2/3V_{dc}\Delta t}{\Delta I_q}$$

4. Variateur de vitesse comprenant un onduleur de type MLI pour fournir une tension pulsée à une machine synchrone triphasée à aimants permanents, **caractérisé en ce qu'**il met en oeuvre le procédé défini dans l'une des revendications 1 à 3.

## Patentansprüche

1. Steuerverfahren, das in einem Umrichter umgesetzt wird, zum Bestimmen der Induktivitäten des Flusses und des Drehmoments (Ld, Lq) einer Permanentmagnet-Synchronmaschine, umfassend drei Phasen (a, b, c), die jeweils in einer Richtung ausgerichtet sind, einen Stator und einen Rotor, **dadurch gekennzeichnet, dass** das Verfahren Schritte aufweist:

- des Anlegens eines Spannungsvektors (V1, V3, V5) in der Richtung jeder Phase (a, b, c) in positive Richtung und eines Spannungsvektors (V2, V4, V6) in negative Richtung während einer vorbestimmten Zeitdauer für eine Phase, wobei das Anlegen des Spannungsvektors in positive Richtung und des Spannungsvektors in negative Richtung darin besteht, eine Spannungssequenz anzulegen, die einen positiven Spannungsschlitz einer bestimmten Impulsbreite (Tp) aufweist, der von einem negativen Spannungsschlitz mit der doppelten bestimmten Impulsbreite (Tp) gefolgt ist, der von einer positiven Impulsbreite der bestimmten Impulsbreite (Tp) gefolgt ist,
- des Messens einer Stromantwort in jeder Phase nach dem Anlegen der Spannungsvektoren in die zwei Richtungen, wobei die Stromantwort für jede Phase eine positive Spitze und eine negative Spitze aufweist,
- des Abrufens für jede Phase und zu den gleichen Zeitpunkten von zwei unterschiedlichen Stromwerten (Ia1+, Ia2+, Ib1+, Ib2+, Ic1+, Ic2+) auf der positiven Stromspitze in ihrer Wachstumsphase und von zwei unterschiedlichen Stromwerten (Ia1-, Ia2-, Ib1-, Ib2-, Ic1-, Ic2-) auf der negativen Stromspitze in ihrer Abnahmephase,
- des Bestimmens der folgenden Werte

$$\Delta Ia_{ave} = \frac{\left|\delta I_{a+}\right| + \left|\delta I_{a-}\right|}{2}$$

$$\Delta Ia_{diff} = \frac{\left|\delta I_{a+}\right| - \left|\delta I_{a-}\right|}{2}$$

$$\Delta Ib_{ave} = \frac{\left|\delta I_{b+}\right| + \left|\delta I_{b-}\right|}{2}$$

$$\Delta Ib_{diff} = \frac{\left|\delta I_{b+}\right| - \left|\delta I_{b-}\right|}{2}$$

$$\Delta Ic_{ave} = \frac{\left|\delta I_{c+}\right| + \left|\delta I_{c-}\right|}{2}$$

$$\Delta Ic_{diff} = \frac{\left|\delta I_{c+}\right| - \left|\delta I_{c-}\right|}{2}$$

wobei $\delta I_{a+}$, $\delta I_{a-}$, $\delta I_{b+}$, $\delta I_{b-}$, $\delta I_{c+}$, $\delta I_{c-}$ für jede Phase die Stromänderungen darstellen, die ausgehend von den Stromwerten berechnet werden, die auf der erhaltenen positiven Stromspitze und auf der erhaltenen negativen Stromspitze abgerufen werden.
- des Bestimmens eines Positionswinkels ($\theta_r$) des Rotors gegenüber dem Stator ausgehend von der folgenden Beziehung:
-

$$\Delta I_{diff} = \Delta Ia_{diff} + \Delta Ib_{diff} e^{j2\pi/3} + \Delta Ic_{diff} e^{j4\pi/3} \quad et \quad \theta_r = \arctan(\Delta I_{diff})$$

- des Bestimmens der Induktivitäten des Flusses (Ld) und des Drehmoments (Lq) der Maschine in Abhängigkeit von dem bestimmten Winkel ($\theta_r$).

2. Verfahren nach Anspruch 1, **dadurch gekennzeichnet, dass** der Spannungsvektor, der in positive Richtung angewendet wird, und der Spannungsvektors, der in negative Richtung angewendet wird, für jede Phase (a, b, c) eine gleiche Norm aufweisen.

3. Verfahren nach Anspruch 1 oder 2, **dadurch gekennzeichnet, dass** die Induktivitäten des Flusses und des Drehmoments der Maschine in Abhängigkeit von den folgenden Beziehungen bestimmt werden:

$$\Delta I_{ave} = \frac{1}{3}(\Delta Ia_{ave} + \Delta Ib_{ave} + \Delta Ic_{ave})$$

$$\Delta I_{var} = \frac{2}{3}(\Delta Ia_{ave}\cos(2\theta r) + \Delta Ib_{ave}\cos(2\theta r + 2\pi/3) + \Delta Ic_{ave}\cos(2\theta r + 4\pi/3)$$

$$\Delta I_d = \Delta I_{ave} + \Delta I_{var}$$

$$\Delta I_q = \Delta I_{ave} - \Delta I_{var}$$

$$L_d = \frac{2/3V_{dc}\Delta t}{\Delta I_d}$$

$$L_q = \frac{2/3V_{dc}\Delta t}{\Delta I_q}$$

4. Umrichter, umfassend einen Wechselrichter vom Typ des PWM-Wechselrichters, um einer Permanentmagnet-Dreiphasen-Synchronmaschine eine Pulsspannung bereitzustellen, **dadurch gekennzeichnet, dass** er das Verfahren umsetzt, das in einem der Ansprüche 1 bis 3 definiert ist.

**Claims**

1. A control method implemented in a variable speed drive for determining the flux and torque inductances (Ld, Lq) of a permanent magnet synchronous machine comprising three phases (a, b, c), each oriented in a direction, a stator and a rotor, **characterized in that** said method includes steps of:

- applying, in the direction of each phase (a, b, c) of a voltage vector (V1, V3, V5) in the positive direction and of a voltage vector (V2, V4, V6) in the negative direction for a predetermined duration, for a phase, the application of the voltage vector in the positive direction and of the voltage vector in the negative direction entailing applying a voltage sequence comprising a positive voltage slot of a predetermined pulse width (Tp), followed by a negative voltage slot having two times the predetermined pulse width (Tp), followed by a positive voltage slot of the predetermined pulse width (Tp),
- measuring a current response in each phase after applying the voltage vectors in the two directions, the current response comprising, for each phase, a positive peak and a negative peak,
- recovering, for each phase and at the same instants, two distinct current values (Ia1+, Ia2+, Ib1+, Ib2+, Ic1+, Ic2+) on the positive current peak, in its upward phase and two distinct current values (Ia1-, Ia2-, Ib1-, Ib2-, Ic1-, Ic2-) on the negative current peak, in its downward phase,
- determining the following values:

$$\Delta Ia_{ave} = \frac{\left|\delta I_{a+}\right| + \left|\delta I_{a-}\right|}{2}$$

$$\Delta Ia_{diff} = \frac{\left|\delta I_{a+}\right| - \left|\delta I_{a-}\right|}{2}$$

$$\Delta Ib_{ave} = \frac{\left|\delta I_{b+}\right| + \left|\delta I_{b-}\right|}{2}$$

$$\Delta Ib_{diff} = \frac{\left|\delta I_{b+}\right| - \left|\delta I_{b-}\right|}{2}$$

$$\Delta Ic_{ave} = \frac{\left|\delta I_{c+}\right| + \left|\delta I_{c-}\right|}{2}$$

$$\Delta Ic_{diff} = \frac{\left|\delta I_{c+}\right| - \left|\delta I_{c-}\right|}{2}$$

in which $\delta I_{a+}$, $\delta I_{a-}$, $\delta I_{b+}$, $\delta I_{b-}$, $\delta I_{c+}$, $\delta I_{c-}$ represent, for each phase, the current variations calculated on the basis of the current values recovered on the positive current peak and on the negative current peak that are obtained.
- determining an angle ($\theta$r) for the position of the rotor in relation to the stator on the basis of the following relation:

$$\Delta I_{diff} = \Delta Ia_{diff} + \Delta Ib_{diff} e^{j2\pi/3} + \Delta Ic_{diff} e^{j4\pi/3} \quad et \quad \theta_r = \arctan(\Delta I_{diff})$$

- determining the flux (Ld) and torque (Lq) inductances of the machine as a function of the determined angle ($\theta_r$).

2. The method as claimed in claim 1, **characterized in that**, for each phase (a, b, c), the voltage vector applied in the positive direction and the voltage vector applied in the negative direction have one and the same norm.

3. The method as claimed in claim 1 or 2, **characterized in that** the flux and torque inductances of the machine are determined on the basis of the following relations:

$$\Delta I_{ave} = \frac{1}{3}(\Delta Ia_{ave} + \Delta Ib_{ave} + \Delta Ic_{ave})$$

$$\Delta I_{var} = \frac{2}{3}(\Delta Ia_{ave}\cos(2\theta r) + \Delta Ib_{ave}\cos(2\theta r + 2\pi/3) + \Delta Ic_{ave}\cos(2\theta r + 4\pi/3)$$

$$\Delta I_d = \Delta I_{ave} + \Delta I_{var}$$

$$\Delta I_q = \Delta I_{ave} - \Delta I_{var}$$

$$L_d = \frac{2/3 V_{dc}\Delta t}{\Delta I_d}$$

$$L_q = \frac{2/3 V_{dc} \Delta t}{\Delta I_q}$$

4. A variable speed drive comprising a PWM-type inverter for supplying a pulsed voltage to a permanent magnet three-phase synchronous machine, **characterized in that** it implements the method defined in one of claims 1 to 3.

$$L_q = \frac{2/3 V_{dc} \Delta t}{\Delta I_q}$$

Fig. 1

Fig. 2A

Fig. 2B

*Fig. 3*

*Fig. 4*

**Fig. 5**

$$\delta I_{c-} = \left| I_{c2-} \right| - \left| I_{c1-} \right|$$

$$\delta I_{b+} = \left| I_{b2+} \right| - \left| I_{b1+} \right|$$

$$\delta I_{a-} = \left| I_{a2-} \right| - \left| I_{a1-} \right|$$

$$\delta I_{a+} = \left| I_{a2+} \right| - \left| I_{a1+} \right|$$

$$\delta I_{c+} = \left| I_{c2+} \right| - \left| I_{c1+} \right|$$

$$\delta I_{b-} = \left| I_{b2-} \right| - \left| I_{b1-} \right|$$

θr

a b c d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6498452 B
- US 7067997 B
- US 6172498 B
- US 2007070560 A
- US 2006284582 A
- WO 2004023639 A
- US 2004051495 A
- US 2002060548 A

### Littérature non-brevet citée dans la description

- Sensorless control of AC Machines at Low Speed and Standstill Based on the ''INFORM'' Method. **PR. M. SHROEDL.** 31st Conférence Record of IEEE Industry Applications Conférence. IAS, 06 Octobre 1996, vol. 1, 270-277